# EUROPEAN PATENT APPLICATION

(11) **EP 1 589 051 A1**
(43) Date of publication of application: **26.10.2005**
(21) Application number: 05008013.4
(22) Date of filing: 13.04.2005
(51) Int. Cl.: C08F 283/00, C08F 283/06, C08F 2/38

(54) **Process for preparing graft polyols using enol ethers as reaction moderators**

(30) Priority: 23.04.2004 US 830944
(71) Applicant: BASF CORPORATION, Florham Park, NJ 07932 (US)
(72) Inventor: Heyman, Duane Allan, Monroe, MI 48161 (US)
(74) Representative: Karg, Jochen

(57) **Abstract**

The present invention provides a process for preparing a stable graft polyol dispersion. The graft polyol dispersion has low viscosity and a high solids content. An ethylenically unsaturated monomer is polymerized in a polyol mixture including a macromer polyol and a carrier polyol. A free radical initiator and a reaction moderator are also present during polymerization. The reaction moderator is of the formula: 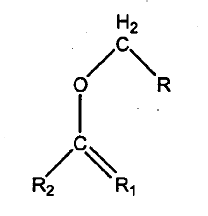 wherein
R is a phenyl group,
R₁ is selected from the group of an aliphatic hydrocarbon radical having 1 to 18 carbon atoms, and
R₂ is selected from the group of a phenyl group, a nitrile group, a methoxycarbonyl group, a carbamoyl group, and combinations thereof.

## Description

### BACKGROUND OF THE INVENTION

### 1. Field of the Invention

The present invention relates to a process for preparing graft polyol dispersions. More specifically, the present invention relates to graft polyol dispersions prepared by polymerizing, in the presence of a free radical initiator and a reaction moderator, an ethylenically unsaturated monomer or mixture of monomers in a polyol mixture including a macromer polyol and a carrier polyol, wherein the reaction moderator is an enol ether.

### 2. Description of the Related Art

Graft polyol dispersions are known in the art, as are polymerization processes for preparing the graft polyol dispersions. More specifically, graft polyol dispersions are stable dispersions of a polymer in a carrier polyol. A macromer polyol, which is herein defined as a polyol having induced unsaturation, is polymerized with a monomer or mixture of monomers to produce the polymer. These graft polyol dispersions are useful for the production of polyurethanes.

There have been many attempts to improve graft polyol dispersions. Efforts have been directed toward increasing the amount of polymer that is dispersed in the carrier polyol, i.e., increasing the solids content of the graft polyol dispersions. Major obstacles have traditionally posed problems in preparing graft polyol dispersions having the high solids content. One of the obstacles is that the viscosity of the resulting dispersions is generally too high, resulting in difficulty with production. Efforts have also been directed toward providing stable graft polyol dispersions in terms of minimal agglomeration and phase separation over time.

Reaction moderators are an important component in the process for preparing the stable graft polyol dispersions having low viscosity and high solids content. One reaction moderator that is in widespread use is 1-dodecanethiol (DDT). DDT contains a sulfur group, which causes DDT to have a foul odor. Consequently, graft polyol dispersions prepared with DDT tend to emit a foul odor. Thus, it would be desirable to utilize reaction moderators that do not contain sulfur groups.

Other common reaction moderators are also available. For example, alkyl halides and alcohols are available as reaction moderators. However, alkyl halides are undesirable because of a potential for corrosion in metal reaction systems, and alcohols must be present in an amount of 10 to 20 parts by weight, based on 100 parts by weight of the monomer, to be effective. At such levels, the alcohols must be recovered to eliminate high material costs, thus increasing production costs over systems in which the reaction moderator need not be recovered.

Certain enol ethers have also been used as reaction moderators in the process for preparing the stable graft polyol dispersions. For example, U.S. Patent No. 5,554,662 discloses enol ethers are of the formula: 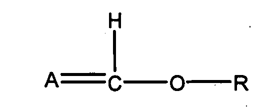 wherein R represents an alkyl group, a cycloalkyl group, or a phenyl group and A represents a cylcohexene group. The enol ethers include the carbon-carbon double bond that enables the enol ethers to be used as reaction moderators. However, these enol ethers are not ideal reaction moderators because the carbon-carbon double bond could be more reactive by changing the location of the carbon-carbon double bond within the enol ethers and by modifying functional groups to make the enol ethers more reactive.

Alpha-Benzyloxystyrene, alpha-benzyloxyacrylonitrile, methyl alpha-benzyloxyacrylate, and alpha-benzyloxyacrylamide have been used as chain transfer agents in polymerization processes for the production of polystyrene. In such processes, the chain transfer agents control a length of polymer chains produced during the polymerization. However, the alpha-benzyloxystyrene, alpha-benzyloxyacrylonitrile, methyl alpha-benzyloxyacrylate, and alpha-benzyloxyacrylamide have not, to date, been used in polymerization processes for graft polyol dispersions. Furthermore, in polymerization processes for producing graft polyol dispersions, the length of the polymer chains has no direct relation to viscosity or solids content. Therefore, unlike production of polystyrene, there is no need to control the length of polymer chains produced in graft polyol dispersions to achieve low viscosity and high solids content.

Due to the deficiencies in the prior art, including those described above, it would be desirable to provide graft polyol dispersions and a method for preparing the graft polyol dispersions in the presence of a reaction moderator such as alpha-benzyloxystyrene, alpha-benzyloxyacrylonitrile, methyl alpha-benzyloxyacrylate, and alpha-benzyloxyacrylamide. None of the prior art teaches or suggests that a stable graft polymer dispersion having low viscosity and high solids content can be produced in the presence of reaction moderators of the present invention.

### SUMMARY OF THE INVENTION AND ADVANTAGES

The present invention provides a stable graft polyol dispersion and a process for preparing the stable graft polyol dispersion. The process includes polymerizing, in the presence of at least one free radical initiator and at least one reaction moderator, at least one ethylenically unsaturated monomer in a polyol mixture including a macromer polyol and a carrier polyol. The reaction moderator is of the formula: 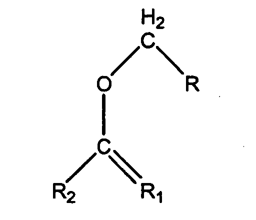 wherein
- R: is a phenyl group,
- R₁: is selected from the group of aliphatic hydrocarbon radicals having 1 to 18 carbon atoms, and
- R₂: is selected from the group of a phenyl group, a nitrile group, a methoxycarbonyl group, a carbamoyl group, and combinations thereof.

Graft polyol dispersions produced according to the process of the subject invention do not contain the foul odor of graft polyol dispersions produced with reaction moderators that contain sulfur groups. The graft polyol dispersions also have low viscosity and a high solids content. Furthermore, the reaction moderators utilized in the subject invention include a carbon-carbon double bond that is adjacent to and made reactive by the R₂ group.

### DETAILED DESCRIPTION OF A PREFERRED EMBODIMENT

The subject invention provides a process for preparing stable graft polyol dispersions through polymerization. More specifically, the graft polyol dispersions are prepared through a free radical polymerization process. The graft polyol dispersions have a low viscosity and a high solids content and are employed for the preparation of polyurethane foams. The graft polyol dispersions are prepared through the polymerization of an ethylenically unsaturated monomer or mixture of monomers in a polyol mixture including a macromer polyol and a carrier polyol. The polymerization also takes place in the presence of a free radical initiator and a reaction moderator. More specifically, the resulting graft polyol dispersions include a polymer and the carrier polyol. The polymer is produced through the polymerization of the monomer and co-polymerization of the monomer with the macromer polyol. The macromer polyol is herein defined as a polyol mixture having induced unsaturation, i.e., carbon-carbon double bonds or carbon-carbon triple bonds. Preferably, the macromer polyol has from 0.1 to 1.0 moles of induced unsaturation per mole of the macromer polyol. The carrier polyol provides a separate phase from the polymer, thus resulting in the graft polyol dispersion. The monomer and the macromer polyol are polymerized in the presence of the reaction moderator of the formula: 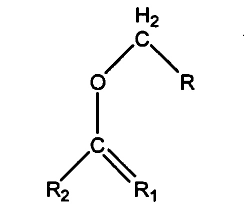 wherein
- R: represents a phenyl group,
- R₁: represents aliphatic hydrocarbon radicals having 1 to 18 carbon atoms, and
- R₂: represents a phenyl group, a nitrile group, a methoxycarbonyl group, a carbamoyl group, and combinations thereof.

More specifically, the reaction moderator is preferably of the formula: 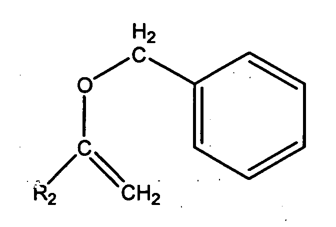 wherein
- R₂: represents a phenyl group, a nitrile group, a methoxycarbonyl group, a carbamoyl group, and combinations thereof.

In one preferred embodiment, R₂ is the phenyl group. Therefore, the reaction moderator is of the formula:
This chemical structure is commonly referred to as alpha-benzyloxystyrene. 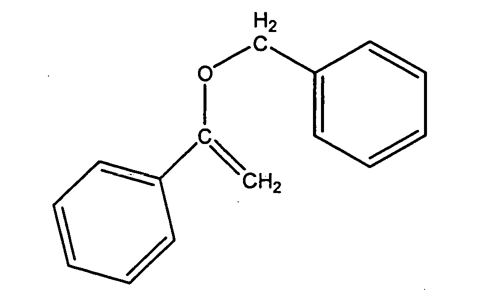 In a second preferred embodiment, the reaction moderator is of the formula:

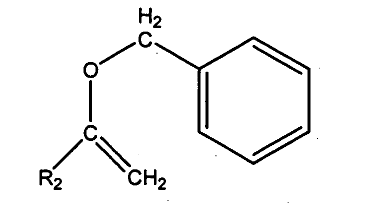

Wherein
- R₂: is a nitrile group, a methoxycarbonyl group, a carbamoyl group, and combinations thereof.

The aforementioned reaction moderators include a carbon-carbon double bond that is made reactive by the R₂ group, more specifically, the phenyl group, the nitrile group, the methoxycarbonyl group, and the carbamoyl group. The reaction moderators function through an addition-fragmenfation reaction to moderate the polymerization of the monomers and the copolymerization of the monomers with the macromer polyol.

Graft polyol dispersions prepared in the presence of the aforementioned reaction moderators, as shown in Table 1 in the example section below, have low viscosity while remaining substantially stable. The reaction moderators enable the graft polyol dispersions to be produced without having a foul odor, while having low viscosity and high solids contents that are sufficient for applications using the graft polyol dispersion. More specifically, the graft polyol dispersions of the present invention have viscosities that are less than 20,000 millipascal seconds (mPa*s), preferably from 4,000 to 12,000 mPa*s, at 25 deg.C. The graft polyol dispersions are also prepared to have a high solids content. Preferably, the graft polyol dispersions of the present invention have a solids content of from 30 to 70 parts by weight, more preferably from 40 to 50 parts by weight, based on 100 parts by weight of the graft polyol dispersion.

The reaction moderators are present in an amount of 0.5 to 1.99 parts by weight, more preferably between 0.7 and 1.55 parts by weight, based on 100 parts by weight of the monomer. The reaction moderator is incorporated into the polymer during the process of polymerizing the monomer with the macromer polyol. Thus, there is no need to recover the reaction moderator from the graft polyol dispersion.

The polyol mixture employed in the polymerization is in an amount of 30 to 75 parts by weight, more preferably between 50 and 60 parts by weight, based on 100 parts by weight of the graft polyol dispersion. Representative carrier polyols that are employed in combination with the macromer polyol are often prepared by the catalytic condensation of an alkylene oxide or mixture of alkylene oxides either simultaneously or sequentially with an organic compound having at least two active hydrogen atoms, such as evidenced by U.S. Pat. Nos. 1,922,459; 3,190,927; and 3,346,557. Representative carrier polyols include polyhydroxyl-containing polyesters, polyoxyalkylene polyether polyols, polyhydroxy-terminated polyurethane polymers, polyhydroxyl-containing phosphorous compounds, polyacetals, aliphatic polyols, ammonia, and amines including aromatic, aliphatic, and heterocydicamines, as well as mixtures thereof. Alkylene oxide adducts of compounds that contain 2 or more different groups within the above-defined classes may also be used, for example, amino alcohols that contain an amino group may be used.

The polyhydroxyl-containing polyesters, to be used as carrier polyols, may include any suitable hydroxy-terminated polyester. The hydroxy-terminated polyester is prepared, for example, from polycarboxylic acids and polyhydric alcohols. Any suitable polycarboxylic acid may be used such as oxalic acid, malonic acid, succinic acid, glutaric acid, adipic acid, pimelic acid, suberic acid, azelaic acid, sebacic acid, brassylic acid, thapsic acid, maleic acid, fumaric acid, glutaconic acid, alpha, beta-diethylsuccinic acid, isophthalic acid, terephthalic acid, hemimellitic acid, and 1,4-cyclohexanedicarboxylic acid. Any suitable polyhydric alcohol, including both aliphatic and aromatic, may be used such as ethylene glycol, propylene glycol, trimethylolpropane, 1,1,1-trimethylolethane, 1,2,6-hexanetriol, alpha-methyl glycoside, pentaerythritol, and sorbitol. Also included within the term "polyhydric alcohol" are compounds derived from phenol such as 2,2-bis(4-hydroxyphenyl) propane, commonly known as Bisphenol A.

The hydroxyl-containing polyester may also be a polyester amide such as is obtained by including some amine or amino alcohol in the reactants for the preparation of the polyesters. Thus, polyester amides may be obtained by condensing an amino alcohol such as ethanolamine with the polycarboxylic acids set forth above or they may be made using the same components that make up the hydroxyl-containing polyester with only a portion of the components being a diamine such as ethylene diamine.

Polyhydroxyl-containing phosphorous compounds that may be used as carrier polyols include those compounds disclosed in U.S. Pat. No. 3,639,542. Preferred polyhy-droxyl-containing phosphorus compounds are prepared from alkylene oxides and acids of phosphorous having a P₂O₅ equivalency of from about 72 wt.% to about 95 wt.%. Suitable polyacetals that may be condensed with alkylene oxides to be used as carrier polyols include the reaction product of formaldehyde or other suitable aldehyde with a dihydric alcohol or an alkylene oxide such as those disclosed above.

Suitable amines which may be condensed with alkylene oxides to be used as carrier polyols include aromatic amines such as aniline, o-chloroaniline, p-aminoaniline, 1,5-diaminonaphthalene, methylene dianiline, the condensation products of aniline and formaldehyde, and 2,3-, 2,6-, 3,4-, 2,5-, and 2,4- diaminotoluene; aliphatic amines such as methylamine, triisopropanolamine, ethylenediamine, 1,3-diaminopropane, 1,3-diaminobutane, and 1,4-diaminobutane.

The macromer polyol is employed in an amount of 2 to 6 parts by weight, more preferably 3 to 5 parts by weight, based on 100 parts by weight of the polyol mixture. The macromer polyol may include a polyetherester polyol prepared by the reaction of a polyoxyalkylene polyether polyol with maleic anhydride and an alkylene oxide. The polyether polyol is isomerized by methods including heat and isomeration catalysts such as morpholine, dibutylamine, diethylamine, diethanolamine and the like. The alkylene oxides that may be employed for the preparation of the polyether polyol include ethylene oxide, propylene oxide, butylene oxide, amylene oxide and mixtures of these oxides.

Any suitable polyoxyalkylene polyether polyol may be used to prepare the macromer polyol, such as the polymerization product of an alkylene oxide or a mixture of alkylene oxides with a polyhydric alcohol. Any suitable polyhydric alcohol may be used such as those disclosed above for use in the preparation of the hydroxy-terminated polyesters. Any suitable alkylene oxide may be used such as ethylene oxide, propylene oxide, butylene oxide, amylene oxide, and mixtures of these oxides. The polyalkylene polyether polyols may be prepared from other starting materials such as tetrahydrofuran and alkylene oxide-tetrahydrofuran mixtures; epihalohydrins such as epichlorohydrin; as well as aralkylene oxides such as styrene oxide. The polyoxyalkylene polyether polyols may have either primary or secondary hydroxyl groups. Included among the polyether: polyols are polyoxyethylene glycol, polyoxypropylene glycol, polyoxybutylene glycol, polytetramethylene glycol, block copolymers, for example, combinations of polyoxypropylene and polyoxyethylene glycols, poly-1 ,2-oxybutylene and polyoxyethylene glycols, poly-1,4-oxybutylene and polyoxyethylene glycols, and random copolymer glycols prepared from blends of two or more alkylene oxides or by the sequential addition of two or more alkylene oxides. The polyoxyalkylene polyether polyols may be prepared by any known process such as, for example, the process disclosed by Wurtz in 1859 and Encyclopedia of Chemical Technology, Vol. 7, pp.257-262, published by Interscience Publishers, Inc. (1951) or in U.S. Pat. No. 1,922,459. Preferably, the polyethers include the alkylene oxide addition products of trimethylolpropane, glycerine, pentaerythritol, sucrose, sorbitol, propylene glycol, and 2,2'-(4,4'-hydroxyphenyl)propane and blends thereof having equivalent weights of from 100 to 5,000.

Also, macromer polyols containing ester groups may be employed in the subject invention. These macromer polyols are prepared by the reaction of an alkylene oxide with an organic dicarboxylic acid anhydride and a compound containing reactive hydrogen atoms. A more comprehensive discussion of these macromer polyols and their method of preparation can be found in U.S. Pat. Nos. 3,585,185; 3,639,541 , and 3,639,542.

A polyetherester polyol prepared with a catalyst that is a salt or oxide of a divalent metal may be used to prepare the macromer polyol. The concentration of catalyst which may be employed is an amount of 0.005 to 0.5 parts by weight, based on 100 parts by weight of the polyol mixture. The temperatures employed range from 75 deg.C to 175 deg.C. The equivalent weight of the polyol used to make the macromer polyol may vary from 1,000 to 10,000, preferably from 2,000 to 6,000.

Among the divalent metals which may be employed as the catalyst for preparing the macromer polyol are: zinc acetate, zinc chloride, zinc oxide, zinc neodecanoate, tin chloride, calcium chloride, calcium oxide, calcium acetate, copper naphthenate, cadmium acetate, cadmium chloride, nickel chloride, manganese chloride, and manganese acetate.

The macromer polyol may also be prepared by the reaction of any conventional polyol, such as the carrier polyols described above, with an organic compound having both ethylenic unsaturation and a hydroxyl, carboxyl, anhydride, isocyanate, or epoxy group, or other group reactive with an active hydrogen-containing group, or they may be prepared by employing an organic compound having both ethylenic unsaturation and a hydroxyl, carboxyl, anhydride, or epoxy group, or other group reactive with an active hydrogen-containing group as a reactant in the preparation of the carrier polyol. Representative of such organic compounds include unsaturated mono- and polycarboxylic acids and anhydrides such as maleic acid and anhydride, fumaric acid, crotonic acid and anhydride, acrylic acid, acryoyl chloride, hydroxy ethyl acrylate or methacrylate and halogenated maleic acids and anhydrides, unsaturated polyhydric alcohols such as 2-butene-1,4-diol, glycerol allyl ether, trimethylolpropane allyl ether, pentaerythritol allyl ether, pentaerythritol vinyl ether, pentaerythritol diallyl ether, and 1-butene-3,4-diol, unsaturated epoxides such as 1-vinylcyclohexene-3,4-epoxide, butadiene monoxide, vinylglycidyl ether(1-vinyloxy-2,3-epoxy propane), glycidyl methacrylate and 3-allyl-oxypropylene oxide (allyl glycidyl ether). If a polycarboxylic acid or anhydride is employed to incorporate unsaturation into the macromer polyol, it is preferable to react the macromer polyol with an alkylene oxide, preferably ethylene or propylene oxide, to replace the unreacted carboxyl, groups with hydroxyl groups prior to employment in the present invention. The amount of alkylene oxide employed is such as to reduce the acid number of the macromer polyol to about 5 or less.

The carrier polyols reacted with the maleic acid or maleic anhydride, i.e., maleated macromer polyols, are isomerized at temperatures ranging from 80 deg. C to 120 deg. C for one-half hour to three hours in the presence of an effective amount of an isomerization catalyst. The catalyst is employed at concentrations greater than 0.01 parts by weight, based on 100 parts by weight of the macromer polyol.

Certain of the above-mentioned catalysts such as calcium naphthenate promote the isomerization of the maleate to a fumarate structure during the preparation of the macromer polyol, while others such as zinc chloride, which is an effective catalyst for the polymerization, inhibit this isomerization.

The polyols may also be reacted with suitable isocyanates to produce the macromer polyol, such as isocyanatoethylmethacrylate (IEM) and alpha,alpha-dimethyl meta-isopropenyl benzyl isocyanate. The alpha,alpha-dimethyl meta-isopropenyl benzyl isocyanate is commercially available from Cytec Industries, Inc.

As mentioned above, the graft polymer dispersions of the invention are prepared by the polymerization, in the above-described polyol mixtures, of an ethylenically unsaturated monomer or a mixture of ethylenically unsaturated monomers. Representative ethylenically unsaturated monomers which may be employed in the present invention include butadiene, isoprene, 1,4-pentadiene, 1,6-hexadiene, 1,7-octadiene, styrene, alpha-methylstyrene, 2-methylstyrene, 3-methylstyrene and 4-methylstyrene, 2,4-dimethylstyrene, ethylstyrene, isopropylstyrene, butylstyrene, phenylstyrene, cycloexyl-: styrene, benzylstyrene, and the like; substituted styrenes such as cyanostyrene, nitrostyrene, N,N-dimethylaminostyrene, acetoxystyrene, methyl 4-vinylbenzoate, phenoxystyrene, p-vinylphenyl oxide, and the like; the acrylic and substituted acrylic monomers such as acrylonitrile, acrylic acid, methacrylic acid, methyl acrylate, 2-hydroxyethyl acrylate, methyl methacrylate, cyclohexyl methacrylate, benzyl methacrylate, isopropyl methacrylate, octyl methacrylate, methacrylonitrile, ethyl alpha-ethoxyacrylate, methyl alpha-acetaminoacrylate, butyl acrylate, 2-ethylhexyl acrylate, phenyl acrylate, phenyl methacrylate, N,N-dimethylacrylamide, N,N-dibenzyl-acrylamide, N-butylacrylamide, methacrylyl formamide, and the like; the vinyl esters, vinyl ethers, vinyl ketones, etc., such as vinyl acetate, vinyl butyrate, isopropenyl acetate, vinyl formate, vinyl acrylate, vinyl methacrylate, vinylmethoxyacetate, vinyl benzoate, vinyltoluene, vinyl naphthalene, vinyl methyl ether, vinyl ethyl ether, vinyl propyl ethers, vinyl butyl ethers, vinyl 2-ethylhexyl ether, vinylphenyl ether, vinyl 2-methoxyethyl ether, methoxybutadiene, vinyl 2-butoxyethyl ether, 3,4-dihydro-1,2-pyran, 2-butoxy-2'-vinyloxy diethyl ether, vinyl methyl ketone, vinylethyl ketone, vinyl phosphonates such as vinyl phenyl ketone, vinyl ethyl sulfone, N-methyl-N-vinyl acetamide, N-vinylpyrrolidone, vinyl imidazole, divinyl sulfoxide, divinyl sulfone, sodium vinylsulfonate, methyl vinylsulfonate, N-vinyl pyrrole, and the like; dimethyl fumarate, dimethyl maleate, maleic acid, crotonic acid, fumaric acid, itaconic acid, monomethyl itaconate, t-butylaminoethyl methacrylate, dimethylaminoethyl methacrylate, glycidyl acrylate, allyl alcohol, glycol monoesters of itaconic acid, vinyl pyridine, and the like.

Any of the known polymerizable monomers can be used and the compounds listed above are illustrative and not restrictive of the monomers suitable for use in this invention. Preferably, the monomer is acrylonitrile, styrene or mixtures thereof.

Preferably, the amount of monomer employed in the polymerization reaction is in an amount of 25 to 70 parts by weight, more preferably from 30 to 50 parts by weight, based on 100 parts by weight of the graft polyol dispersion. Preferably, the polymerization occurs at a temperature of between 25 deg.C and 180 deg.C, more preferably between 80 deg.C and 140 deg.C. Preferably, an amount of 50 to 100 parts by weight, more preferably 50 to 85 parts by weight, of the monomer, based on 100 parts by weight of the monomer, is styrene or 4-methylstyrene.

The process of the present invention employs the free radical initiator. Preferably, the free radical initiator is present in an amount of 0.1 to 3.0 parts by weight, more preferably in an amount of 0.3 to 1.0 part by weight, based on 100 parts by weight of the monomer.

In one embodiment, the free radical initiator is a vinyl polymerization initiator, such as peroxides, persulfates, perborates, percarbonates, azo compounds, etc. These include hydrogen peroxide, dibenzoyl peroxide, acetyl peroxide, benzoyl hydroperoxide, t-butyl hydroperoxide, di-t-butyl peroxide, lauroyl peroxide, butyryl peroxide, diisopropylbenzene hydroperoxide, cumene hydroperoxide, paramenthane hydroperoxide, diacetyl peroxide, di-alpha-cumyl peroxide, dipropyl peroxide, diisopropyl peroxide, isopropyl-t-butyl peroxide, butyl-t-butyl peroxide, difuroyl peroxide, bis(triphenylmethyl) peroxide, bis(p-methoxybenzoyl)peroxide, p-monomethoxybenzoyl peroxide, rubene peroxide, ascaridol, t-butyl peroxybenzoate, diethyl peroxyterephthalate, propyl hydroperoxide, isopropyl hydroperoxide, n-butyl hydroperoxide, t-butyl hydroperoxide, cyclohexyl hydroperoxide, trans-decalin hydroperoxide, alpha-methylbenzyl hydroperoxide, alpha-methyl-alpha-ethyl benzyl hydroperoxide, tetralin hydroperoxide, triphenylmethyl hydroperoxide, diphenylmethyl hydroperoxide, alpha,alpha'-azobis-(2-methylheptonitrile), 1,1'-azo-bis(cyclohexane carbonitrile), 4,4'-azobis(4-cyanopentanoic acid), 2,2'-azobis(isobutyronitrile), 1-t-butylazo-1-cyanocyclohexane, persuccinic acid, diisopropyl peroxy dicarbonate, 2,2'-azobis(2,4-dimethylvaleronitrile), 2-t-butylazo-2-cyano-4-methoxy-4-methylpentane, 2-t-butylazo-2-cyanobutane, 1-t-amylazo-1-cyanocyclo-hexane, 2,2'-azobis(2,4-dimethyl-4-methoxy)valeronitrile, 2,2'-azobis-2-methylbutyronitrile, 2-t-butylazo-2-cyano-4-methylpentane, 2-t-butylazo-2-isobutyronitrile, 2-butylperoxyisopropyl carbonate and the like. A mixture of initiators may also be used.

In another embodiment, the free radical initiator may comprise a tert-amyl peroxy compound. Suitable tert-amyl peroxy compounds include tert-amyl peroxyneodecanoate; tert-amyl peroxypivalate; tert-amyl peroxy-2-ethylhexanoate; 1,1-di-(tert-amyl peroxy)-3,3,5-trimethylcyclohexane; 2,2-[4,4-di(tert-amyl peroxycyclohexyl)propane]; 1,1-di-(tert-amyl peroxy)-cyclohexane; tert-amyl peroxy-2-methylbenzoate; 1,1-di-(tert-amyl peroxy)-3,5,5-trimethylcyclohexane; 2,2-di-(tert-amyl peroxy)butane; di-tert-amyl diperoxyazelate; tert-amyl peroxy isopropyl carbonate; tert-amyl peroxybenzoate; tert-amyl peroxyacetate; n-butyl-4,4-di(tert-amyl peroxy)valerate; di- tert-amyl diperoxyphthalate; di-(2-tert-amyl peroxyisopropyl)benzene; 2,5-dimethyl-25-di(tert-amyl peroxy)hexane; 1,4-di-(2-tert-amyl peroxyisopropyl)benzene; tert-amyl cumyl peroxide; di-tert-amyl peroxide; tert-amyl hydroperoxide; tert-amyl peroxydiethylacetate; tert-amyl peroxyisobutyrate; tert-amyl peroxy-2-ethylhexyl carbonate; tert-amyl peroxy stearyl carbonate; tert-amyl peroxy(2-ethylhexanoate); and 1,1-bis(tert-amyl peroxy)cyclohexane. Such tert-amyl peroxy compounds may be used either alone or in combination with each other. In the preferred embodiment, the initiators are selected from the group of tert-amyl peroxy compounds and azo compounds, as set forth above.

The graft polyol dispersions may be prepared through semi-batch or continuous processes. The procedures for preparing the graft polyol dispersion are known in the art.

Polyurethane foams produced from the graft polyol dispersions of the present invention are generally prepared by the reaction of a graft polymer dispersion with an organic polyisocyanate in the presence of a blowing agent and optionally in the presence of additional polyhydroxyl-containing components, chain-extending agents, catalysts, surface-active agents, stabilizers, dyes, fillers and pigments. Suitable processes for the preparation of polyurethane foam are known in the art, as is suitable machinery to be used in conjunction therewith. When water is added as the blowing agent, corresponding quantities of excess isocyanate to react with the water and produce carbon dioxide may be used. It is possible to proceed with the preparation of the polyurethane foam by a prepolymer technique wherein an excess of organic polyisocyanate is reacted with the graft polyol dispersion, which is then reacted with water and/or additional graft polyol dispersion to prepare the polyurethane foam.

The components may also be reacted in a single working step commonly known as the "one-shot" technique of preparing polyurethanes. Furthermore, instead of water, low boiling hydrocarbons such as pentane, hexane, heptane, pentene, and heptene; azo compounds such as azohexahydrobenzodinitrile; halogenated hydrocarbons such as dichlorodifluoromethane, trichlorofluoromethane, dichlorodifluoroethane, vinylidene-chloride, and methylene chloride may be used as blowing agents.

Organic polyisocyanates that may be employed in the production of polyurethane foam include aromatic, aliphatic, and cycloaliphatic polyisocyanates and combinations thereof. Representative of these types are the diisocyanates such as m-phenylene diisocyanate, 2,4-toluene diisocyanate, 2,6-toluene diisocyanate, mixtures of 2,4- and 2,6-toluene diisocyanate, hexamethylene diisocyanate, tetramethylene diisocyanate, cyclohexane-1,4-diisocyanate, hexahydrotoluene diisocyanate (and isomers), naphthalene-1,5-diisocyanate, 1-methoxyphenyl-2,4-diisocyanate, 4,4'-diphenylmethane diisocyanate, 4,4'-biphenylene diisocyanate, 3,3'-dimethoxy-4,4'-biphenyl diisocyanate, 3,3'-dimethyl-4,4'-biphenyldiisocyanate and 3,3'-dimethyldiphenylmethane-4,4'-diisocyanate; the triisocyanates such as 4,4',4"-triphenylmethane triisocyanate, and toluene 2,4,6-triisocyanate; and the tetraisocyanates such as 4,4'-dimethyldiphenylmethane-2,2'-5,5'-tetraisocyanate and polymeric polyisocyanates such as polymethylene polyphenylene polyisocyanate.

Crude polyisocyanates may also be used, such as crude toluene diisocyanate obtained by the phosgenation of a mixture of toluene diamines or crude diphenylmethane isocyanate obtained by the phosgenation of crude diphenylmethane diamine. The preferred or crude isocyanates are known in the art.

As mentioned above, the graft polyol dispersions may be employed along with another polyhydroxyl-containing component commonly employed in the art. Any of the polyhydroxyl-containing components that are described above for use in the preparation of the graft polyol dispersions may be employed in the preparation of the polyurethane foams.

The chain-extending agents that may be employed in the preparation of the polyurethane foams include those compounds having at least two functional groups bearing active hydrogen atoms such as water, hydrazine, primary and secondary diamines, amino alcohols, amino acids, hydroxy acids, glycols, or mixtures thereof. A preferred group of chain-extending agents includes water, ethylene glycol, 1,4-butanediol and primary and secondary diamines which react more readily with the prepolymer than does water such as phenylene diamine, 1,4-cyclohexane-bis-(methylamine), ethylenediamine, diethylenetriamine, N-(2-hydroxypropyl)ethylenediamine, N,N'-di(2-hydroxypropyl)ethylenediamine, piperazine, and 2-methylpiperazine.

Any suitable catalyst may be used including tertiary amines such as, for example, triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'-trimethylisopropyl propylenediamine, 3-diethylaminopropyldiethylamine, dimethylbenzylamine, and the like. Other suitable catalysts are, for example, stannous chloride, dibutyltin di-2-ethyl hexanoate, stannous oxide, as well as other organometallic compounds such as are disclosed in U.S. Pat. No. 2,846,408.

A surface-active agent is generally necessary for production of high grade polyurethane foam according to the present invention, since in the absence of same, the foams collapse or contain very large uneven cells. Numerous surface-active agents have been found satisfactory. Nonionic surface active agents are preferred. Of these, the nonionic surface-active agents such as the well-known silicones have been found particularly desirable. Other surface-active agents which are operative, although not preferred, include polyethylene glycol ethers of long chain alcohols, tertiary amine or alkanolamine salts of long chain alkyl acid sulfate esters, alkyl sulfonic esters, and alkyl arylsulfonic acids.

It has been found that when graft polymer dispersions of the present invention are used in the preparation of polyurethane foam products, a flame retardant compound is preferably incorporated into the foam product to impart flame retardancy. Among the flame retardants which may be employed are: pentabromodiphenyl oxide, dibromopropanol, tris(beta-chloropropyl)phosphate, 2,2-bis(bromoethyl) 1,3-propanediol, tetrakis(2-chloroethyl)ethylene diphosphate, tris(2,3-dibromopropyl)phosphate, tris(beta-chloroethyl)phosphate, tris(1,2-dichloropropyl)phosphate, bis-(2-chloroethyl) 2-chloroethylphosphonate, molybdenum trioxide, ammonium molybdate, ammoniumphosphate, pentabromodiphenyloxide, tricresyl phosphate, hexabromocyclododecane and dibromoethyl-dibromocyclohexane. The concentrations of flame retardant compounds which may be employed range from 5 to 25 parts per 100 parts of polyol mixture.

The following examples illustrate the nature of the invention and are not to be construed as limiting of the invention. Unless otherwise indicated, all parts are given as parts by weight.

### EXAMPLES

- Polyol A: is a glycerin-initiated propylene oxide, ethylene oxide adduct, having a number average molecular weight of about 3000, a hydroxyl number of 51, and a viscosity of 565 centipoise at 25 deg.C (BASF Corporation).
- Polyol B: is an 8 wt % acrylonitrile/styrene dispersion in Polyol A prepared in the presence of Macromer A and having a viscosity of 1666 centipoise at 25 deg.C (BASF Corporation).
- Vazo® 67: is 2,2'-azobis(2-methylbutanenitrile) free radical polymerization initiator (E.I. Dupont Co).
- Peroxide: A is t-(amylperoxy)cyclohexane, a free radical polymerization initiator (Akzo Nobel).
- Peroxide B: is t-amyl peroxy-2-ethylhexanoate, a free radical polymerization initiator (Akzo Nobel).
- TMI: is alpha,alpha-dimethyl meta-isopropenyl benzyl isocyanate (Cytec Industries, Inc.).
- Macromer A: is a TMI modified sucrose and water co-initiated polyether polyol, having a number average molecular weight of about 7000, and a hydroxyl number of 21. (BASF Corporation).
- Macromer: B is a fumarate-modified trimethylpropane-initiated polyether polyol having a hydroxyl number of 25 (BASF Corporation). A representative procedure for synthesis is described in U.S. Patent RE 33,291 column 11, procedure A.

### Reaction

- Moderator A: is alpha-benzyloxystyrene (MLS GmbH).

### Reaction

- Moderator B: is 2-butanol.

Graft polyol dispersions according to the present invention are prepared in a semi-batch reactor for examples 1-12 in Table 1. Example 13 is a comparative example. A suitable reactor is provided and subjected to the following procedure. The reactants and levels thereof are set forth in Table 1 below. After charging a 1 liter four-neck RB flask with a polyol mixture comprising all of the macromer polyol and about half of the carrier polyol, as indicated in Table 1, the reaction mixture is heated to the reaction temperature. A monomer mixture comprising the monomer and the reaction moderator is added through a Kenics® static mixer for the specified time. Similarly, a polyol/initiator mixture comprising the rest of the carrier polyol and the Vazo® 67 free radical polymerization initiator is added through the Kenics® static mixer for the specified time. Thus, the monomer mixture and the polyol/initiator mixture are combined in the Kenics® static mixer. The reaction temperature is 125 deg.C, monomer mixture addition time is 200 minutes, polyol/initiator mixture addition time is 210 minutes, reaction time is 30 minutes, and stirring is performed at 300 rpm. After the reaction period, the mixture is vacuum stripped for 30 minutes at about 1 mm Hg.

**Table 1**

| Graft Polyol | 1 | 2 | 3 | 4 | 5 | 6 | 7 | 8 | 9 | 10 | 11 | 12 | 13 |
|---|---|---|---|---|---|---|---|---|---|---|---|---|---|
| Component: | | | | | | | | | | | | | |
| Macromer, parts by weight based on 100 parts by weight of monomer | | | | | | | | | | | | | |
| A | 4.3 | 4.3 | | | | | | 4.3 | 4.3 | 5.4 | 4.3 | 4.3 | 5.0 |
| B | | | 4.3 | 4.3 | 3.1 | 3.1 | 4.3 | | | | | | |
| Carrier Polyol, parts by weight based on 100 parts by weight of graft polyol formulation | | | | | | | | | | | | | |
| Charge, Polyol A | 26.5 | 26.6 | 26.5 | 26.6 | 27.0 | 27.0 | 26.5 | 26.5 | 26.5 | 26.0 | 26.5 | 26.5 | 20.5 |
| Feed, Polyol A | 28.2 | 28.2 | 28.2 | 28.2 | 28.2 | 28.2 | 28.2 | 28.2 | 28.1 | 28.1 | 28.2 | 28.2 | 22.2 |
| Reaction Moderator, parts by weight based on 100 parts by weight of monomer | | | | | | | | | | | | | |
| A | 1.0 | 0.7 | 1.0 | 0.7 | 1.0 | 1.3 | 1.3 | 1.3 | 1.6 | 1.6 | 1.3 | 1.3 | |
| B | | | | | | | | | | | | | 20.0 |
| Monomer, parts by weight based on 100 parts by weight of graft polyol formulation | | | | | | | | | | | | | |
| Acrylonitrile | 12.8 | 12.8 | 12.8 | 12.8 | 12.8 | 12.8 | 12.8 | 12.8 | 12.7 | 12.7 | 21.4 | 21.4 | 20.5 |
| Styrene | 30.0 | 30.0 | 30.0 | 30.0 | 30.0 | 30.0 | 30.0 | 30.0 | 29.9 | 29.9 | 21.4 | 21.4 | 25.1 |
| Vazo 67, parts by weight based on 100 parts by weight of graft polyol formulation | 0.3 | 0.3 | 0.3 | 0.3 | 0.3 | 0.3 | 0.3 | 0.3 | 0.3 | 0.3 | 0.3 | 0.3 | 0.3 |
| Reaction Temperature, °C | 125 | 125 | 125 | 125 | 125 | 125 | 125 | 125 | 125 | 125 | 125 | 115-125 | 100-115 |
| Add Time, Minutes | | | | | | | | | | | | | |
| Monomer | 200 | 200 | 200 | 200 | 200 | 200 | 200 | 200 | 200 | 200 | 200 | 200 | 230 |
| Polyol Mixture | 210 | 210 | 210 | 210 | 210 | 210 | 210 | 210 | 210 | 210 | 210 | 210 | 240 |
| Viscosity, mPa*s | 4040 | 4640 | 10400 | 11100 | 7280 | 6760 | 10900 | 4600 | 4600 | 4640 | 4680 | 5360 | 4720 |
| Calculated Solids, parts by weight based on 100 parts by weight of graft polyol dispersion | 43.1 | 42.9 | 43.2 | 43.1 | 42.9 | 42.9 | 43.2 | 43.1 | 43.2 | 43.3 | 42.5 | 43.1 | 50.0 |

In addition, graft polyol dispersions according to the present invention are prepared through a continuous process for examples 14 and 15. Examples 16-20 are comparative examples. The reactants and levels thereof are set forth in Table 2 below. The continuous reactor is initially charged with about 300 grams of either macromer plus a portion of the carrier polyol, as in examples 14, 17 and 19, or the heel of previously prepared final graft polyol. The continuous reactor has a volume of approximately 300 milliliters. A first graft polyol dispersion is prepared in the semi-batch reactor according to the method as previously set forth above for examples 1-13. Then, a first reaction stream comprising the first graft polyol dispersion, the carrier polyol, the macromer polyol, and the free radical polymerization initiator is formed and fed continuously into the reactor. A second reaction stream comprising the monomers and reaction moderator is formed and fed continuously into the reactor. The two reaction streams are fed thru a Kenics® mixer where they mix before entering the reactor as in the semi-batch process. The continuous reactor is generally run at temperatures between 25°C and 180°C and more preferably at a temperature of from 90 to 150°C with a stirring rate of approximately 1,500 rpm. The final graft polyol product is continuously collected. The collected product is generally vacuum stripped and may be stabilized by the addition of known stabilizing agents. As would be understood by one of ordinary skill in the art the procedure is capable of many modifications. In another embodiment, the two reaction streams are mixed together prior to entry into the continuous reactor. Also, each reaction stream can comprise any mixture of the reaction components, for example, the first reaction stream could contain monomer or reaction moderator in addition to the other components. Likewise the second reaction stream can include the first graft polyol, the macromer, carrier polyol, free radical initiator, or any mixture thereof. The first 180 minutes of product is collected and discarded, the last 20 minutes of product is collected and vacuum stripped for 30 minutes at 125°C at a pressure of approximately 1 mm Hg.

The comparative final graft polyol has a viscosity at 25°C of approximately 12,800 mPa*s.

**Table 2**

| Component: | 14 | 15 | 16 | 17 | 18 | 19 | 20 |
|---|---|---|---|---|---|---|---|
| Macromer, parts by weight based on 100 parts by weight of monomer | | | | | | | |
| A | | 6.0 | 6.0 | 6.0 | 6.0 | 6.0 | 6.0 |
| B | 6.0 | | | | | | |
| Reactor Charge, grams | | | | | | | |
| Charge, Polyol A | 290 | | | 290 | | 290 | |
| Charge, Macromer A | | | | 10.0 | | 10.0 | |
| Charge, Macromer B | 10.0 | | | | | | |
| Charge, Graft Polyol Dispersion of Example 14 | | 300 | | | | | |
| Charge, Graft Polyol Dispersion of Example 15 | | | 300 | | | | |
| Charge, Graft Polyol Dispersion of Example 17 | | | | | 300 | | |
| Charge, Graft Polyol Dispersion of Example 19 | | | | | | | 300 |
| Polyol, parts by weight based on 100 parts by weight of the graft polyol formulation | | | | | | | |
| Feed, Polyol A | 44.9 | 41.3 | 38.5 | 38.5 | 38.5 | 39.0 | 39.0 |
| Feed, Polyol B | | 3.6 | 3.4 | 3.4 | 3.4 | 3.4 | 3.4 |
| Reaction Moderator, parts by weight based on 100 parts by weight of monomer | | | | | | | |
| A | 1.1 | 1.1 | | | | | |
| B | | | 15.0 | 15.0 | 15.0 | 12.5 | 12.5 |
| Monomer, parts by weight based on 100 parts by weight of the graft polyol formulation | | | | | | | |
| Acrylonitrile | 17.1 | 17.1 | 15.9 | 15.9 | 15.9 | 16.1 | 16.1 |
| Styrene | 34.2 | 34.2 | 31.9 | 31.9 | 31.9 | 32.3 | 32.3 |
| Peroxide A + B, parts by weight based on 100 parts by weight of the graft polyol formulation | 0.3 | 0.3 | 0.3 | 0.3 | 0.3 | 0.3 | 0.3 |
| Reaction Temperature, °C | 135 | 135 | 135 | 135 | 135 | 135 | 135 |
| Add Time, Minutes | | | | | | | |
| Monomer | 150 | 150 | 150 | 150 | 150 | 180 | 180 |
| Polyol Mixture | 150 | 150 | 150 | 150 | 150 | 180 | 180 |
| Viscosity, mPa*s | 14100 | 7880 | 6600 | 6520 | 6240 | 6840 | 6280 |
| Calculated Solids, parts by weight based on 100 parts by weight of the graft polyol dispersion | 52.3 | 52.4 | 51.4 | 51.7 | 52.7 | 51.4 | 51.3 |

Referring to Tables 1 and 2, the results show that use of the reaction moderator provides graft polyol dispersions that have low viscosity, i.e., a viscosity below 20,000 mPa*s, more preferably between 3,000 and 12,000 mPa*s. Furthermore, the graft polyol dispersions produced according to the process of the subject invention have high solids content, specifically, a solids content between 30% and 70%, more preferably between 40% and 60%.

As shown in examples 13 and 16-20, the graft polyol dispersion produced utilizing 2-butanol as the reaction moderator required much more of the reaction moderator to produce the graft polyol dispersion having comparable viscosity and solids content to the graft polyol dispersions produced according to the process of the subject invention. The reaction moderator was present in an amount of from 12.5 to 20.0 parts by weight based on 100 parts by weight of the monomer. At such levels, the reaction moderator must be recovered to eliminate high material costs. Thus, the reaction moderators utilized in the process of the subject invention are more ideal for the production of graft polyol dispersions.

## Claims

1. A process for preparing a stable graft polyol dispersion having low viscosity and a high solids content, said process comprising the step of polymerizing, in the presence of at least one free radical initiator and at least one reaction moderator, at least one ethylenically unsaturated monomer in a polyol mixture comprising a macromer polyol and a carrier polyol, wherein the reaction moderator is of the formula:
wherein 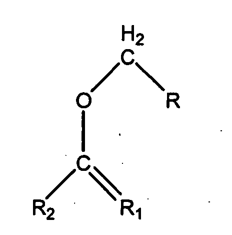
R is a phenyl group;
R₁ is an aliphatic hydrocarbon radical having 1 to 18 carbon atoms; and
R₂ is selected from the group of a phenyl group, a nitrile group, a methoxycarbonyl group, a carbamoyl group, and combinations thereof.

2. A process as set forth in claim 1 wherein the reaction moderator is of the formula:
wherein 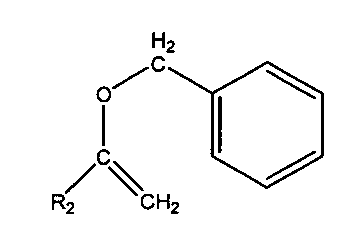
R₂ is selected from the group of a phenyl group, a nitrile group, a methoxycarbonyl group, a carbamoyl group, and combinations thereof.

3. A process as set forth in claim 1 wherein the reaction moderator is of the formula:

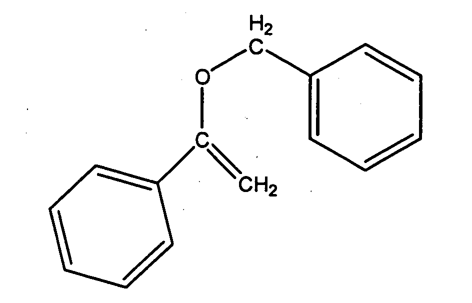

4. A process as set forth in claim 1 wherein the reaction moderator is of the formula: 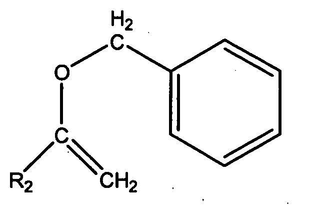 wherein
R₂ is selected from the group of a nitrile group, a methoxycarbonyl group, a carbamoyl group, and combinations thereof.

5. A process as set forth in claim 1 wherein the reaction moderator is present in an amount of from 0.5 to 1.99 parts by weight, based on 100 parts by weight of the monomer.

6. A process as set forth in claim 1 wherein the monomer is present in an amount of from 25 to 70 parts by weight, based on 100 parts by weight of the graft polyol dispersion.

7. A process as set forth in claim 1 wherein the monomer is at least one of a styrene monomer and an acrylonitrile monomer.

8. A process as set forth in claim 7 wherein the monomer is a mixture of monomers comprising at least 50 parts by weight of the styrene monomer, based on 100 parts by weight of the mixture of monomers.

9. A process as set forth in claim 8 wherein the mixture of monomers comprises less than 85 parts by weight of the styrene monomer, based on 100 parts by weight of the mixture of monomers.

10. A process as set forth in claim 1 wherein the polyol mixture is present in an amount of from 30 to 75 parts by weight, based on 100 parts by weight of the graft polyol dispersion.

11. A process as set forth in claim 1 wherein the macromer polyol comprises from 2.0 to 6.0 parts by weight, based on 100 parts by weight of the monomer.

12. A process as set forth in claim 1 wherein the macromer polyol is at least one of a fumurate-modified polyol, a maleic acid modified polyol, a maleic anhydride-modified polyol, and an alpha,alpha-dimethyl meta-isopropenyl benzyl isocyanate-modified polyol.

13. A process as set forth in claim 1 wherein the carrier polyol is a polyoxyalkylene polyether polyol.

14. A process as set forth in claim 1 wherein the initiator is a vinyl polymerization initiator.

15. A process as set forth in claim 14 wherein the vinyl polymerization initiator is an azo compound.

16. A process as set forth in claim 1 wherein the initiator is a tert-amyl peroxy compound.

17. A process as set forth in claim 1 wherein the initiator is present in an amount of from 0.1 to 3 parts by weight, based on 100 parts by weight of the graft polyol dispersion.
